Europäisches Patentamt

European Patent Office

Office européen des brevets

(11) Publication number: **0 394 711**
**A2**

# EUROPEAN PATENT APPLICATION

(21) Application number: **90106292.7**

(51) Int. Cl.⁵: **G06F 9/38**

(22) Date of filing: **02.04.90**

(30) Priority: **28.04.89 JP 107449/89**

(43) Date of publication of application:
**31.10.90 Bulletin 90/44**

(84) Designated Contracting States:
**DE FR GB**

(71) Applicant: **KABUSHIKI KAISHA TOSHIBA**
**72, Horikawa-cho Saiwai-ku**
**Kawasaki-shi Kanagawa-ken 210(JP)**

(72) Inventor: **Miyamori, Takashi**
**3-20-4, Tabata,**
**Kita-ku Tokyo,(JP)**
Inventor: **Sasaki, Tohru**
**1-20, Shinmeicho, Saiwai-ku**
**Kawasaki-shi, Kanagawa-ken(JP)**

(74) Representative: **Lehn, Werner, Dipl.-Ing. et al**
**Hoffmann, Eitle & Partner Patentanwälte**
**Arabellastrasse 4**
**D-8000 München 81(DE)**

(54) Branch instruction control unit based on a pipeline method.

(57) Disclosed is a branch instruction control unit based on a pipeline method comprising cache memory means(101), branch information means(102), branch address generation means(107), fetch means(100), instruction decode means(108), and instruction executing means(111). In the unit, when the branch instructions are fetched, the branch is predicted in accordance with the branch predictive information in the branch information memory(102). Then, when establishment of the branch is judged, the target addresses are calculated by the branch address generation means 107) before decoding of the branch instructions, and the instructions designated by the target addresses are fetched from the cache memory means(101) to carry out a series of the pipeline processes.

FIG.3

EP 0 394 711 A2

## BRANCH INSTRUCTION CONTROL UNIT BASED ON A PIPELINE METHOD

### BACKGROUND OF THE INVENTION

#### Field of the Invention

The present invention relates to a branch instruction control unit based on a pipeline method, and particularly to a branch instruction control unit based on a pipeline method for executing instructions with estimating existence of branch of instructions in accordance with information of the past records of branch instructions.

#### Description of the Prior Art

Recently, a pipeline method to execute instructions has been adopted to improve the performance of a data processing unit such as a microprocessor. As basic constraction of the pipelines method, there is known constraction comprising five stages, i.e., an instruction fetch stage, an instruction decode stage, an effective address calculation stage, an operand fetch stage, and an instruction execution stage.

In such a pipeline method, different instruction are respectively processed in each the stage. Moreover, when these instructions are processed without disorder of the pipeline, maximum performance can be obtained. However, when branch of the branch instruction is achieved, instructions which follow the branch instruction and have been already executed in each stage become invalid. Accordingly, subsequent processes must be restarted from the target instruction. Therefore, disorder of the pipeline is caused so that the performance is degraded.

As a method of improving the problem, there has been already proposed a method of processing the branch instruction based on a prediction of possibility of branch. According to the method, it is attempted to decrease the disorder of the pipeline by branch prediction using information on a prediction of branch based on the past record of the branch instruction and by executing the process of the target instruction before the branch instruction is executed.

As one of the conventional methods of processing the branch instruction, fetch of the target instruction is started from the target address which is calculated at the effective address calculation stage of a pipeline.

In another method of processing the branch instruction according to the prior art, a table to show correspondence of addresses of the branch instruction and the terget addresses thereof is prepared, thereby obtaining the target addresses in accordance with the table in the instruction fetch stage or the instruction decode stage.

When a prediction is that the branch will occur, the instruction fetch is started from the target address obtained.

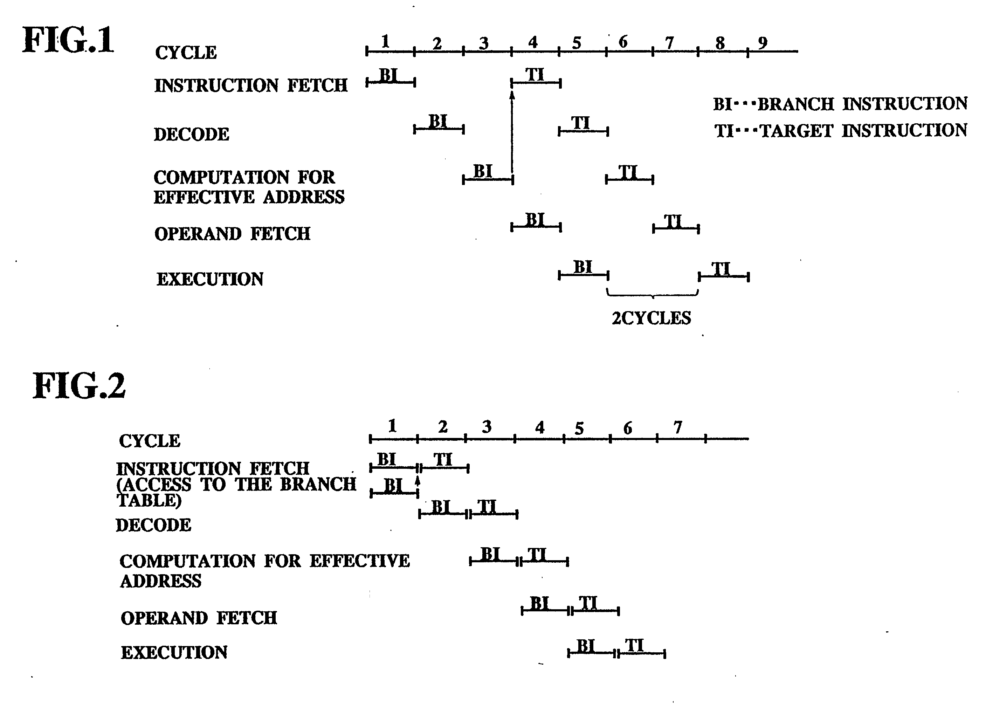

Fig.1 shows a flow diagram of a pipeline in case that the branch prediction is achived in the former method of processing instructions according to the prior art. In the same diagram, when the branch is actually taken, an empty or idle period is caused even through the branch prediction is correct.

Fig.2 shows a flow diagram of a pipeline in case that the branch prediction is achived in the latter method of processing instructions according to the prior art. In the same diagram, the idle period is not seen when the branch prediction is correct. However, in the method, the target addresses and target instructions which require a great many of data should be contained in the table for the correspondence. Therefore, the hardware should be of a large scale. Accordingly, it is physically and economically difficult to largely increases the number of entry in the correspondence table.

While, when the number of entry in the correspondence table is decreased, the cases on which the branch instructions are not entried in the table increase,thus the hit ratio comes to be lowered. In such a case, since the branch prediction becomes impossible, the disorder of the pipeline by branch comes to be frequently caused.

### SUMMARY OF THE INVENTION

To solve the above problems, it is an object of the present invention to provide a branch instruction control unit based on a pipeline method which is so constructed as to decrease the disorder of the pipeline caused by branch by using a hardware having a small scale.

To achieve the object, a branch instruction control unit based on a pipeline method according to the present invention comprises at least memory means for storing a part of memory contents including instructions and the like stored in a main memory unit, branch information memory means for storing branch predictive information corresponding to each minimum instruction unit of the memory contents stored in the memory means, branch address generation means for calculating the target address generation means for calculating the target addresses of the instruction and the like, instruction fetch means for fetching of the instructions, instruction decode means for decording the instructions fetched by the instruction fetch means, and instruction execution means for executing the instructions, and has functions to calculate the target addresses of the branch instructions by the branch address generation means before the branch instruction are decoded and to fetch the instructions in the memory means shown by the target addresses by the instruction fetch means before the branch instructions are executed when the instructions read out from the memory means by the instruction fetch means are branch instructions, and the contents of the branch predictive information corresponding to the branch instructions show establishment of the branch instructions.

As stated above, in the branch instruction control unit based on a pipeline method according to the present invention, in accordance with the branch predictive information from the branch information memory means, the target addresses are calculated by the branch address generation means before the branch instructions are executed, thereafter the target instructions are fetched by the instruction fetch means.

Thus, the disorder of the pipeline caused by the branch instructions is more decreased than ever.

Accordingly, it is possible to reduce the disorder in the pipeline process in case of the achievement of the branch prediction to 0 at the minimum. Moreover, since only information on the past record of the branch should be stored as the branch predictive information in the branch information means, and it is not necessary that the target addresses and the target instructions which require a great many of data be stored therein as in the conventional methods, this unit can be constructed with a small-scale hardware.

In a preferred embodiment of the present invention, since 1-bit branch predictive information data are prepared for every 2 bytes of a minimum instruction length stored in a cache memory as the memory means, the memory capacity is only a sixteenth as compared to the branch predictive information data to be required in the conventional methods. Accordingly, it becomes possible to process the branch instructions at a high speed by using a relatively small-scale hardware.

These and other objects, features and advantages of the present invention will be more apparent from the following description of a preferred embodiment taken in conjunction with the accompanying drawings.

BRIEF DESCRIPTION OF THE DRAWINGS

Figs.1 and 2 are timing charts to show operation of conventional branch instruction control unit based on pipeline methods when the branch is taken.

Fig.3 is a compositional diagram of a branch instruction control unit based on a pipeline method, which is an embodiment of the present invention.

Fig.4 is a compositional diagram of a branch address generation circuit which is a compositional element of the branch instruction control unit shown in fig.3.

Fig.5 is a compositional diagram of each instruction register which is a compositional element of the branch instruction control unit shown in Fig.3.

Fig.6 is a compositional diagram of a branch determinatin circuit which is a compositional element of the branch instruction control unit shown in Fig.3.

Fig.7 is a diagram to explain both the insides of the cache memory and the branch predictive information memory, which are compositional elements of the branch instruction control unit shown in Fig.3.

Fig.8 is a timing chart to show operation of the branch instruction control unit shown in Fig.3 when the branch is established.

DETAILED DESCRIPTION OF THE ENBODIMENTS

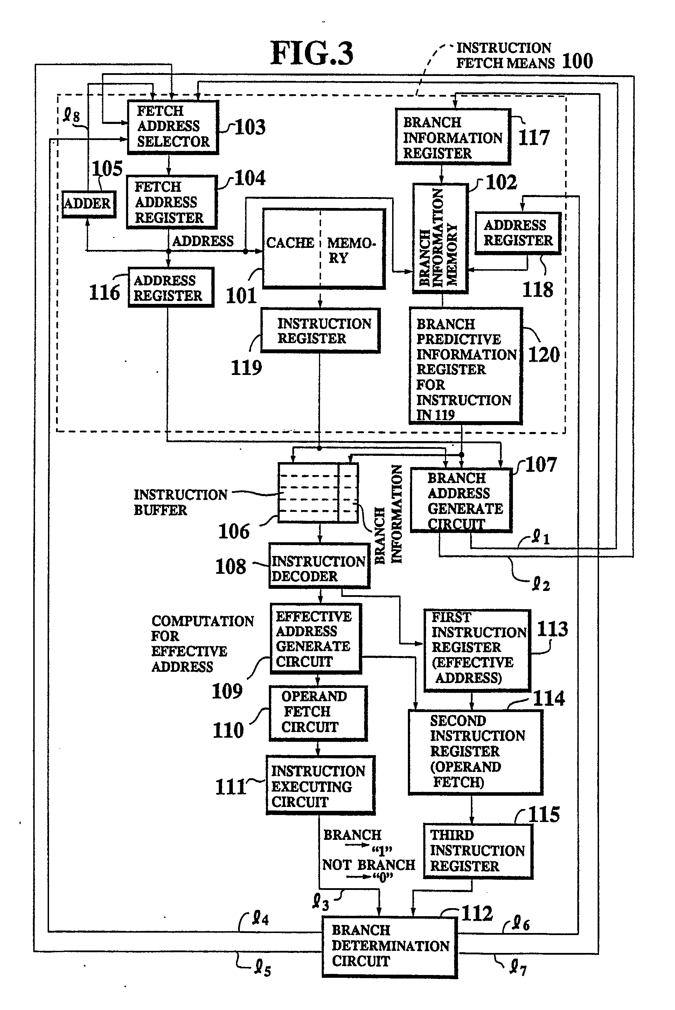

Fig.3 shows a compositional diagram of a branch instruction control unit based on a pipeline method, which is an embodiment of the present invention. The branch instruction control unit in this embodiment comprises a cache memory 101 as a cache memory means for storing a part of contents of a main memory unit, a branch information memory 102 as a branch information memory means for storing branch predictive information for every minimum instruction length, a fetch address selector 103, a fetch address register 104, an adder 105, an instruction buffer 106, a branch address generation circuit 107 for generating target addresses, an instruction decoder 108, an effective address generation curcuit 109 for calculating effective addresses, an operand fetch circuit 110, an instruction execuiting circuit 111, a branch determination circuit 112 for judging establishment of a branch prediction from actual branch information, a first instruction register 113, a second instruction register 114, a third instruction register 115, and other registers 116, 117, 118, 119 and 120.

Moreover, a fetch means comprises the cache memory 101, the branch information memory 102, the fetch address selector 103, the fetch address register 104, the adder 105, the address register 116, the branch information register 117, the address register 118, the instruction register 119 and the branch predictive information register 120.

Hereinafter, operation of the branch instruction control unit of the present invention having the above construction will be described.

The cache memory 101 outputs data corresponding to address information contained in the fetch address register 104 to the instruction register 119. In this case, a data length of the data to be generated from the cache memory is four bytes. The instruction register 119 holds the data generated from the cache memory 101, and outputs them to the instruction buffer 106 and the branch address generation circuit 107.

While, addresses in the fetch address register 104 are transferred to the address register 116, then the address values are outputted to the branch address generation circuit 107 therefrom. In the branch information memory 102 are stored branch predictive information corresponding to every minimum instruction length of the data contained in the cache memory 101. Moreover, from the addresses in the fetch address register 104, contents of the branch predictive information corresponding to instruction indicated by the addresses are read at the same timing as the access time of the cache memory 101. In the case, the minimum instruction length is definesd as two bytes, and the branch predictive information is expressed by one bit. When the bit is designated as "1", the prediction is that the branch is taken, while the prediction is that the branch is not taken when it is designated as "0".

Since a data size of the cache memory 101 is four bytes, the branch predictive information for two bits are read by each the access of the fetch address register 104 to the cache memory 101. The branch predictive information register 120 outputs the branch predictive information memory 102 to the instruction buffer 106 and the branch address generation circuit 107, and holds the contents until new data are inputted therein.

When addresses are set in the register 118 and values to be stored in the branch information memory 102 are set in the register 117, the branch information memory 102 replaces contents of the branch predictive information designated by the addresses with contained in the register 117.

While, the branch address generation circuit 107 receives the instructions outputted from the instruction register 119, the address outputted from the address register 116 and corresponding to the instructions, and the branch predictive information outputted from the branch predictive information register 120. Moreover, when branch instructions are included in the instructions, and the branch is predicted by the branch predictive information, the circuit 107 calculates the target addresses, outputs the values to the fetch address selector 103 through a line $l_1$, and outputs a level "1" to a line $l_2$.

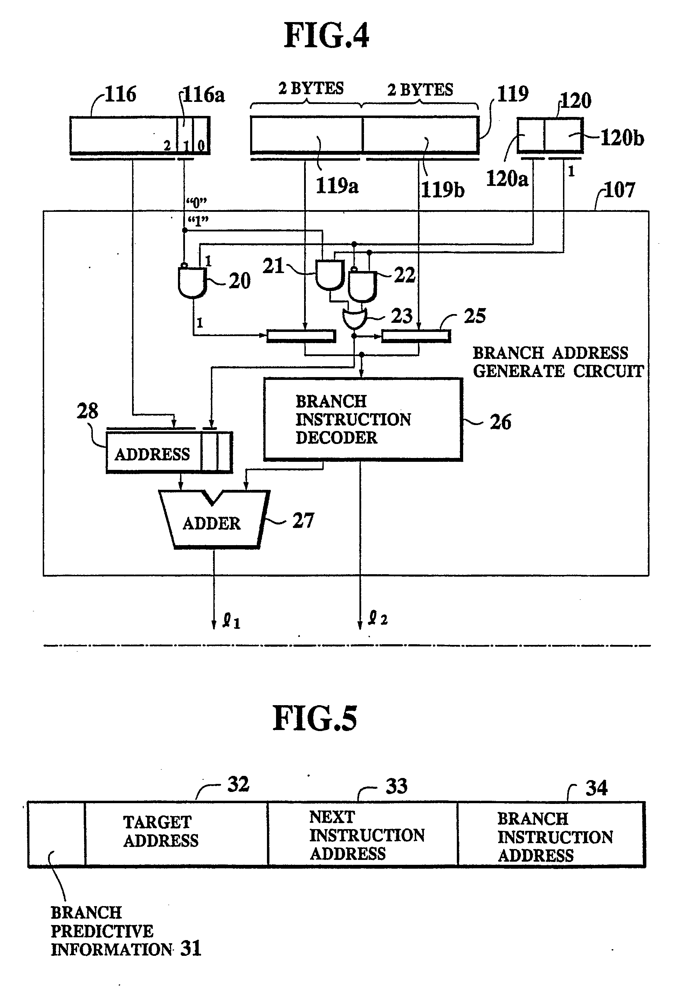

Fig.4 shows a compositional diagram of the branch address generation circuit 107. In the same diagram, real target addresses are obtained as sums of the addresses in which the branch instructions are contained and displacement values in the branch instructions. In this case, the branch instructions are only relative branch instructions for determining the target addresses. When a 1-bit position 116a of the register 116 is "0", all the four bytes of the register 119 are effective, and when the 1-bit position 116a is "1", only the inferior two bytes 119b of the register 119 are effective. While, the superior one byte 120a of the register 120 shows the branch predictive information corresponding to the instruction of the superior two bytes 119a of the register 119, and the inferior one byte 120b of the register 120 shows the branch predictive information corresponding to the instruction of the inferior two bytes 119b of the register 119. Accordingly, when the 1-byte position 116a of the register 116 is "1", branch of the instruction of the superior two bytes 119a of the register 119 is predicted, and a gate 24 becomes ON by output of a logic gate, thus the instruction of the superior two bytes 119a of the register 119 is inputted into a branch instruction decoder 26.

While, when the 1-bit position 116a of the address register 116 is "1", and the inferior bit 120b of the register120 is "1", branch of the instruction of the inferior two bytes 119b of the register 119 is predicted, and the instruction of the inferior two bytes 119b of the register 119 is inputted into a decoder 26 in accordance with signals outputted through each logic gate 21, 22 and 23.

When the branch decoder 26 judges each the inputted instruction to be a relative branch instruction, the level "1" is outputted to a line $l_2$, and displacement values are calculated from the instruction data inputted in the branch instruction decoder 26 and outputted into an adder 27. The adder 27 adds addresses of branch instruction present at a register 28 and the displacement values from the decoder 26 to generate the target addresses, and outputs them to the line $l_1$. Turning now to Fig.3 again, the instruction buffer 106 is, for example, a FIFO (first-in first-out) memory, and successively outputs pairs of the instructions from the register 119 and the branch predictive information from the register 120 corresponding to the instructions into the instruction decoder 108.

The instruction decoder 108 decodes instructions contained in the instruction buffer 106. When the instruction is branch instruction, the decoder 108 outputs address of the branch instruction, address of the next instructions, and branch predictive information to the first instruction register 113. At the same time, the effective address generation circuit 109 receives the instructions and calculates effective addresses. In this case, when the instructions are branch instructions, the circuit 109 calculates the target address and inputs them to the second instruction register 114.

Subsequently, the instruction execution circuit 111 as instruction execution means executes the instructions in accordance with the output of the operand fetch circuit 110. When the branch actually occur, the circuit 111 outputs an output signal of a level "1" to a line $l_3$, while the branch is not carried out, it outputs an output signal of a level "0" thereto.

The branch determanation circuit 112 recieves the output signals and output from a third register 115.

Incidentally, the instruction registers 113, 114 and 115 contain information of branch instructions from the pipeline stages 109, 110 and 111 respectively. Fig.5 shows a compositional diagram of the instruction registers. As shown in the diagram, the instruction registers 113, 114 and 115 respectively comprise a branch predictive information portion 31, a target address portion 32, an address portion 33 of instruction respectively next to a branch instruction and a branch instruction address portion 34.

While, the branch determination circuit 112 judges coincidence between the branch predictive information contained in the third instruction register 115 and the real branch information outputted to the line $l_3$.

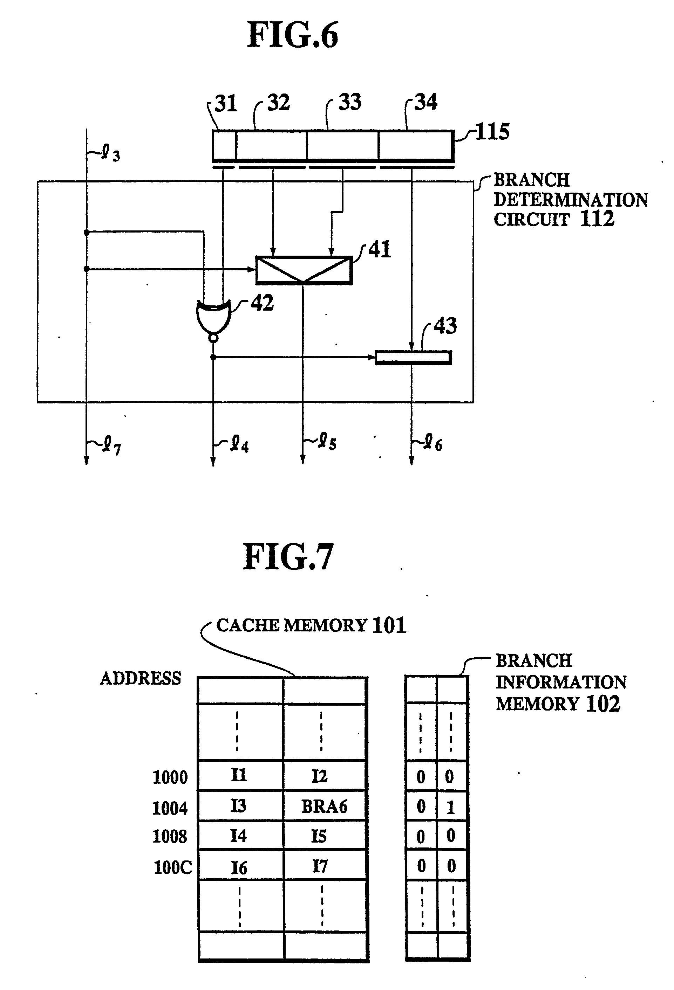

Fig.6 shows a compositional diagram of the branch determination circuit 112. In the same diagram, an exclusive NOR circuit (XNOR) 42 detects the coincidence of both the information. When the two ionformation coincide with each other, the branch prediction is corrected. Then, the circuit 112 outputs the level "1" to a line $l_4$. While, when the branch prediction is not corrected, the level "0" is outputted thereto. The output of the XNOR circuit 42 is given to the address selector 103 (shown in Fig.1) and a gate 43 through the line $l_4$. Accordingly, when the output of the XNOR circuit 42 is "0", that is, when the branch prediction is not corrected, the gate 43 is opened and the branch address of the third instruction register 115 is contained in the register 118 to alter the branch predictive information. Then, renewed branch information is contained in the register 117 through the line $l_3$ to a line $l_7$. When the branch prediction is corrected, the target address 32 of the third instruction register 115 is outputted to a line $l_5$ through a selector 41, then is given to the fetch address selector 103. While, when the branch prediction is not established, the instructions address 33 next to the target address 32 given to the selector 103 through the selector 41 and the line $l_5$.

When the value of the fetch address register 104 is four byte boundary, the adder 105 adds four to the number, and outputs the resultant value to the fetch address selector 103. While, when the number is different from four, the adder 105 adds two to the number, and outputs the resultant value to the fetch address register 104 through the line $l_8$.

The fetch address selector 103 controls addresses outputted through any one of the lines $l_1$, $l_5$ and $l_8$ to be inputted to the fetch address register 104 in accordance with values outputted to the lines $l_2$ and $l_4$. Namely, when the line $l_4$ is at the level "0", that is, when the branch prediction is not corrected, the real target address outputted to the line $l_5$ is inputted to the fetch address register 104. While, when the line $l_4$ is at the level "1" and the line $l_2$ is at the level "1", the target address otained at the branch address generation circuit 107 and outputted to the line $l_1$ are inputted to the fetch address register 104 to fetch the target instructions in accordance with the target address. Moreover, when the line $l_4$ is at the level "1" and the line $l_2$ is at the level "0", the information from the adder 105 are outputted to the fetch address register 104 through the line $l_8$.

Next, operation of the branch control unit shown in Fig.3 will be further described with respect to an example in which the cache memory 101 and the branch information memory 102 are so set as shown in Fig.7. As shown in Fig.7, in the cache memory 101, instructions respectively designated by I1, I2, I3, BRA6, I4, I5, I6, I7 are stored at addresses respectively designated by 1000 through 100C. In the diagram, the instruction BRA6 represents a relative branch instruction whose displacement value is six. While, in the branch information memory 102, branch predictive information respectively corresponding to the instructions in the cache memory 101 are stored. In this case, the value of the branch predictive information corresponding to the instruction BRA6 is "1", thus the branch predictive is established.

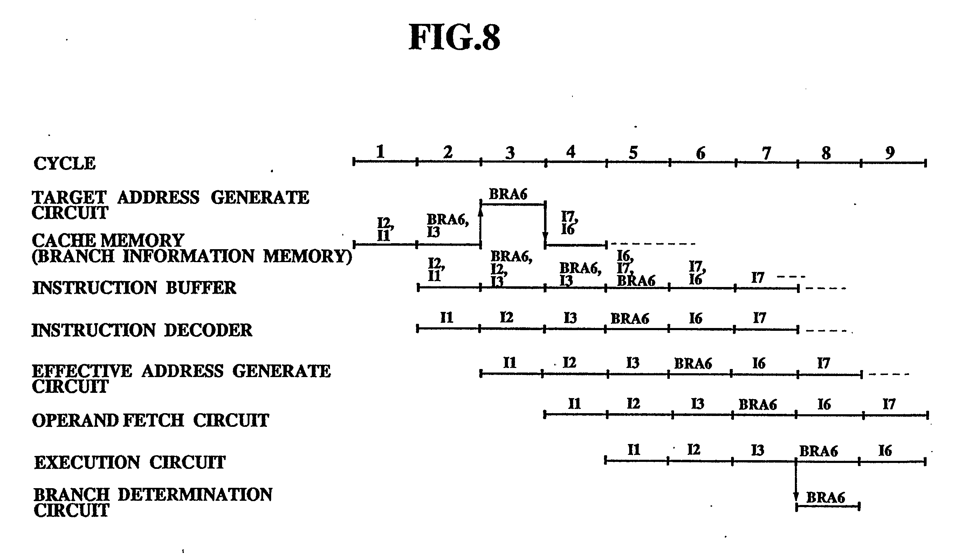

Fig.8 shows an operational timing chart of the branch instruction control unit which executes the program shown in Fig.7. When the value of the fetch address register 104 is "1000", the instruction I1 and I2 corresponding to the address are fetched from the cache memory 101 at the cycle 1. At the cycle 2, the instructions I1 and I2 are contained in the instruction buffer 106, and at the same time, the instruction I1 is decoded at the instruction decoder 108. Moreover, instructions I3 and BRA6 are fetched from the address 1004. At the cycle 3, since the branch predictive information of the instruction BRA6 read out from the branch information memory 102 at the cycle 2 is "1", the target address 100C is calculated at the branch address generation circuit 107. At the cycle 4, the target address 100C obtained at the branch address generation circuit 107 at the previous cycle is contained in the fetch address regester 104, and the target instructions I6 and I7 are fetched. At the cycle 5, the target instruction I6 and I7 are contained in the instruction buffer 106, and the branch instruction BRA6 is decodes at the instruction decoder 108. At the cycle 6, the target instruction I6 is decorded at the instruction decoder 108. Then, at the cycle 8, the branch instruction BRA6 is executed at the execution circuit 111, at the same time, the branch determination circuit 112 judges that the branch prediction is corrected. When the branch prediction is corrected, the process of present instruction sequence is continued as it is.

Then, since the target instruction I6 is executed at the instruction execution circuit 111 at the following cycle 9, the idle period in pipeline caused by the branch in this case is 0. While, when the branch prediction is wrong, real addresses are set in the fetch address register 104, and the instruction fetch is carried out at the following cycle, thus the idle period (not shown) caused in this case is 4.

In the above-stated embodiment, though the branch address generation circuit 107 can get only branch addresses on the relative branch instructions, it is possible to extend the function of the circuit 107 so that it can get also branch addresses on the absolute instructions.

While, in the present embodiment, though an example in which the minimum instruction unit is two bytes, and the size of data read at a time from the cache memory 101 is four bytes was described, it is possible to change these values.

Moreover, in the present embodiment, though 1-bit branch predictive information showing a direction of the last branch is contained in the branch information memory 102 to make a prediction of the next branch in the same direction, it is possibe that the records of directions of a plurality of the previous branch are contained in the branch information memory 102 to make the branch prediction in accordance with the records.

Various modifications will become possible for those skilled in the art after receiving the teachings of the present disclosure without departing from the scope therof.

Reference signs in the claims are intended for better understanding and shall not limit the scope.

**Claims**

1. A branch instruction control unit based on a pipeline method, at least comprising:

memory means(101) for storing a part of memory contents including instructions and the like stored in a main memory unit;
branch information memory means(102) for branch predictive instruction respectively corresponding to the minimum instruction unit in the memory contents stored in the memory means(101);
branch address generation means(107) for calculating target addresses to the instructions and the like;
fetch means for fetching the instructions;
instruction decode means(108) for decoding the instructions fetched by the fetch means(100); and
instruction execution means(111) for executing the instructions; whereby
when a branch instruction exists in the instructions read out from the memory means(101) by the fetch means(100), and the contents of the branch predictive information corresponding to the branch instructions indicate that the branch will occur,
the branch address of the branch instructions are calculated by the branch address generation means(107) before the branch instructions are decoded, and
fetches the instructions in the memory means(101)-designated by the target addresses before the branch instructions are executed by the instruction execution means(111).

2. A branch instruction control unit based on a pipeline method according to claim 1,wherein
the memory means(101) comprises a cache memory.

3. A branch instruction control unit based on a pipeline method according to claim 1, wherein
the branch instructions are relative branch instructions whose target addresses are respectively obtained as sums of address at which the branch instructions are stored and displacement values in the branch instructions.

4. A branch instruction control unit based on a pipeline method according to claim 1, wherein
the branch predictive information corresponding to the minimum instruction unit comprises one bit and is designated by 1 when the branch is taken or by 0 when is not taken.

5. A branch instruction control unit based on a pipeline method according to claim 1, wherein
the minimum instruction unit comprises two bytes.

6. A branch instruction control unit based on a pipeline method according to claim 1, wherein
the branch information memory means(102) stores branch predictive information of a previous time for each of the branch instructions.

7. A branch instruction control unit based on a pipeline method, including a series of stage comprising:
an instruction fetch stage for executing fetch of instructions from memory means(101) for storing instructions and the like;

an instruction decode stage for executing decode of the instructions fetched at the instruction fetch stage;

an operand fetch stage for executing fetch of operands corresponding to the instructions; and

an instruction execution stage for executing the instructions; whereby

when a branch instruction exists in the instructions read out from the memory means(101) in the instruction fetch stage, and the branch instructions is predicted that the branch will occur,

the branch instruction control unit calculates the target addresses of the branch instructions in the instruction decode stage before the branch instructions are decorded, and

fetches the instructions in the memory means(101) designated by the target addresses in the fetch stage before the branch instructions are executed, and performs a series of processes of the stages.

# FIG.1

CYCLE    1   2   3   4   5   6   7   8   9

INSTRUCTION FETCH   BI     TI

DECODE    BI     TI

BI···BRANCH INSTRUCTION
TI···TARGET INSTRUCTION

COMPUTATION FOR EFFECTIVE ADDRESS    BI    TI

OPERAND FETCH    BI    TI

EXECUTION    BI    TI

2CYCLES

# FIG.2

CYCLE    1   2   3   4   5   6   7

INSTRUCTION FETCH (ACCESS TO THE BRANCH TABLE)    BI   TI    BI

DECODE    BI   TI

COMPUTATION FOR EFFECTIVE ADDRESS    BI   TI

OPERAND FETCH    BI   TI

EXECUTION    BI   TI

EP 0 394 711 A2

EP 0 394 711 A2

# FIG.3

INSTRUCTION FETCH MEANS 100

FETCH ADDRESS SELECTOR — 103

$\ell_8$

105

ADDER

FETCH ADDRESS REGISTER — 104

ADDRESS

116 ADDRESS REGISTER

101

CACHE MEMO-RY

BRANCH INFORMATION REGISTER — 117

BRANCH INFORMATION MEMORY — 102

ADDRESS REGISTER

118

INSTRUCTION REGISTER

119

BRANCH PREDICTIVE INFORMATION REGISTER FOR INSTRUCTION IN 119 — 120

INSTRUCTION BUFFER

106

BRANCH INFORMATION

BRANCH ADDRESS GENERATE CIRCUIT — 107

$\ell_1$

108 INSTRUCTION DECODER

$\ell_2$

COMPUTATION FOR EFFECTIVE ADDRESS

EFFECTIVE ADDRESS GENERATE CIRCUIT

FIRST INSTRUCTION REGISTER (EFFECTIVE ADDRESS) — 113

109

110 OPERAND FETCH CIRCUIT

SECOND INSTRUCTION REGISTER (OPERAND FETCH) — 114

111 INSTRUCTION EXECUTING CIRCUIT

THIRD INSTRUCTION REGISTER — 115

BRANCH → "1"
NOT BRANCH → "0"

$\ell_3$

$\ell_4$

112 $\ell_6$

$\ell_5$

BRANCH DETERMINATION CIRCUIT

$\ell_7$

# FIG.4

BRANCH ADDRESS
GENERATE CIRCUIT

BRANCH
INSTRUCTION
DECODER  26

ADDRESS  28

ADDER  27

# FIG.5

| | TARGET ADDRESS 32 | NEXT INSTRUCTION ADDRESS 33 | BRANCH INSTRUCTION ADDRESS 34 |
|---|---|---|---|

BRANCH
PREDICTIVE
INFORMATION 31

# FIG.6

# FIG.7

# FIG.8

CYCLE    1    2    3    4    5    6    7    8    9

TARGET ADDRESS GENERATE
CIRCUIT

BRA6

I2, BRA6, I7,
I1' I3 I6'

CACHE MEMORY
(BRANCH INFORMATION MEMORY)

I2, BRA6, BRA6, I6, I7,
I1' I2, I3 I7, I6' I7
I3 BRA6

INSTRUCTION BUFFER

I1    I2    I3    BRA6    I6    I7

INSTRUCTION DECODER

I1    I2    I3    BRA6    I6    I7

EFFECTIVE ADDRESS GENERATE
CIRCUIT

I1    I2    I3    BRA6    I6    I7

OPERAND FETCH CIRCUIT

I1    I2    I3    BRA6    I6

EXECUTION CIRCUIT

BRA6

BRANCH DETERMINATION
CIRCUIT

EP 0 394 711 A2